# EUROPÄISCHE PATENTSCHRIFT

(11) **EP 1 270 455 B1**
(45) Veröffentlichungstag und Bekanntmachung des Hinweises auf die Patenterteilung: **14.09.2005**
(21) Anmeldenummer: 02011076.3
(22) Anmeldetag: 17.05.2002
(51) Int. Cl.: B65G 29/00, B23P 19/04

(54) **Verfahren und Vorrichtung zur Montage und Verpackung kleinstueckiger Artikel**
Method and apparatus for assembling and packing small articles
Procédé et dispositif pour assembler et emballer des articles de petite taille

(30) Priorität: 25.06.2001 DE 10130533
(43) Veröffentlichungstag der Anmeldung: 02.01.2003
(73) Patentinhaber: THEEGARTEN-PACTEC GMBH & CO. KG, 01237 Dresden (DE)
(72) Erfinder: Kühnast, Bernd, 01219 Dresden (DE); Bodach, Siegmund, 01462 Dresden (DE); Freitag, Hartmut, 01139 Dresden (DE); Hagedorn, Jochen, 01187 Dresden (DE)
(74) Vertreter: Grünecker, Kinkeldey, Stockmair & Schwanhäusser Anwaltssozietät

(56) Entgegenhaltungen:
- EP-A- 0 854 102
- EP-A- 1 048 569
- DE-A- 4 018 121
- US-A- 5 363 968
- US-A- 5 402 623
- US-A- 5 663 565

## Beschreibung

Die vorliegende Erfindung betrifft ein Verfahren und eine Vorrichtung zur Montage und Verpackung kleinstückiger Artikel gemäß den Oberbegriffen der Patentansprüche 1 und 15. Siehe, zum Beispiel, US 5 402 623.

Eine Vorrichtung ist aus der EP 1 048 569 A2 bekannt, wobei eine erste Komponente eines aus zwei Komponenten bestehenden Artikels durch ein Förderband ohne Beabstandung und entlang einer linearen Transportrichtung einer zweiten Fördereinrichtung zugeführt wird. Die zweite Fördereinrichtung weist eine endlose, an zwei Kettenrädern geführte Kette auf, wobei ein unterer Mitnehmer zur Mitnahme der ersten Komponente und ein oberer Mitnehmer zur Mitnahme der zweiten Komponente an der Kette befestigt sind. Eine Beabstandung der ersten Komponenten erfolgt mittels der unteren Mitnehmer. Die oberen Mitnehmer weisen Aussparungen zur Aufnahme der zweiten Komponenten auf. Eine Ausrichtung der ersten und der zweiten Komponente relativ zueinander wird durch eine Anordnung der unteren und oberen Mitnehmer realisiert. Die zueinander ausgerichteten ersten und zweiten Komponenten werden durch eine dritte Fördereinrichtung, welche Preßmittel zum Verbinden der ersten und zweiten Komponenten aufweist, zu einem Artikel gefügt.

Somit besteht hierbei der Nachteil, daß sowohl ein Förderband als auch zwei endlose Ketten angetrieben und synchronisiert werden müssen. Aufgrund der Anordnung der ersten Komponente zwischen den unteren und oberen Mitnehmern und der Beabstandung der ersten Komponenten mit Hilfe des ersten Mitnehmers gestaltet sich zudem das Ausbilden einer Haftverbindung zwischen erster und zweiter Komponenten schwierig. Eine Erhöhung der Maschinenleistung ist aufgrund des vorgenannten Aufbaues der Vorrichtung nach EP 1 048 569 A3 begrenzt. Ebenso bedingt die lineare Förderung eine ausgedehnte räumliche Bauweise, die einer kompakten Anordnung der Förderorgane zuwiderläuft.

Der Erfindung liegt daher die Aufgabe zugrunde, ein Verfahren zur Montage und Verpackung kleinstückiger Artikel anzugeben, mit welchem ein Artikel aus mehreren Komponenten bei schonender Behandlung des Artikels und der einzelnen Komponenten montiert und einer Verpackungseinrichtung zugeführt werden kann.

Die vorgenannte Aufgabe wird bei einem Verfahren der eingangs genannten Art erfindungsgemäß durch die Merkmale des Patentanspruches 1 gelöst.

Vorzugsweise wird die zweite Komponente stoffschlüssig mit der ersten Komponente haftverbunden.

Dabei ist es vorteilhaft, wenn eine optische Gütekontrolle des montierten Artikels vor einer Verpackung unter Verwendung einer Mehrzahl an Bewertungskriterien erfolgt. Dabei erfolgt eine Artikelaussortierung bevorzugt derart, daß ein Artikel aussortiert wird, wenn zumindest eines der Bewertungskriterien nicht erfüllt wird. Eine optische Kontrolle des Artikels ist beispielsweise mit einer Bildanalyse durchführbar. Als Bewertungskriterien werden in einem bevorzugten Ausführungsbeispiel ein Vorhandensein beider Komponenten im Artikel, eine Lage der zweiten Komponenten in einer Ausnehmung der ersten Komponente und eine Unversehrtheit der ersten Komponente und der zweiten Komponente genutzt.

Weitere vorteilhafte Ausführungsbeispiele des erfindungsgemäßen Verfahrens sind in den übrigen Unteransprüchen dargelegt.

Der Erfindung liegt des weiteren die Aufgabe zugrunde, eine Vorrichtung zur Montage und Verpackung von aus zumindest zwei Komponenten bestehenden kleinstückigen Artikeln zu schaffen, wobei eine kompakte Bauweise bei gleichzeitiger schonender Handhabung der Komponenten und der Artikel und eine hohe Maschinenleistung ermöglicht wird.

Diese Aufgabe wird bei einer Vorrichtung der eingangs genannten Art erfindungsgemäß durch die Merkmale des Patentanspruches 15 gelöst.

Die erfindungsgemäße Montage- und Verpackungsvorrichtung zeichnet sich im Rahmen eines kontinuierlichen Montage- und Verpackungsprozesses dadurch aus, daß die Montage der Artikel durch einen bewegbaren, insbesondere rotierenden Montagekopf durchgeführt wird, wobei sowohl die erste Komponente als auch die zweite Komponente separat diesem Montagekopf zugeführt werden.

Weitere vorteilhafte Ausgestaltungen der erfindungsgemäßen Vorrichtung sind in den übrigen Unteransprüchen dargelegt.

Die Erfindung wird nachstehend anhand von Ausführungsbeispielen in Verbindung mit den zugehörigen Zeichnungen näher erläutert. In diesen zeigen:
- Fig. 1: einen Verfahrensablauf für eine Montage eines Artikels bestehend aus einer ersten und einer zweiten Komponente,
- Fig. 2: eine schematische Darstellung eines Teiles einer Vorrichtung zur Montage und Verpackung von aus zumindest jeweils zwei Komponenten bestehenden kleinstückigen Artikeln,
- Fig. 3: eine vergrößerte Ausschnittsdarstellung der Vorrichtung zur Montage und Verpackung von aus zumindest jeweils zwei Komponenten bestehenden kleinstückigen Artikeln gemäß Fig. 2, und
- Fig. 4: eine Teildarstellung eines Montagekopfes der Vorrichtung zur Montage und Verpackung von aus zumindest jeweils zwei Komponenten bestehenden kleinstückigen Artikeln gemäß Fig. 2 und 3.

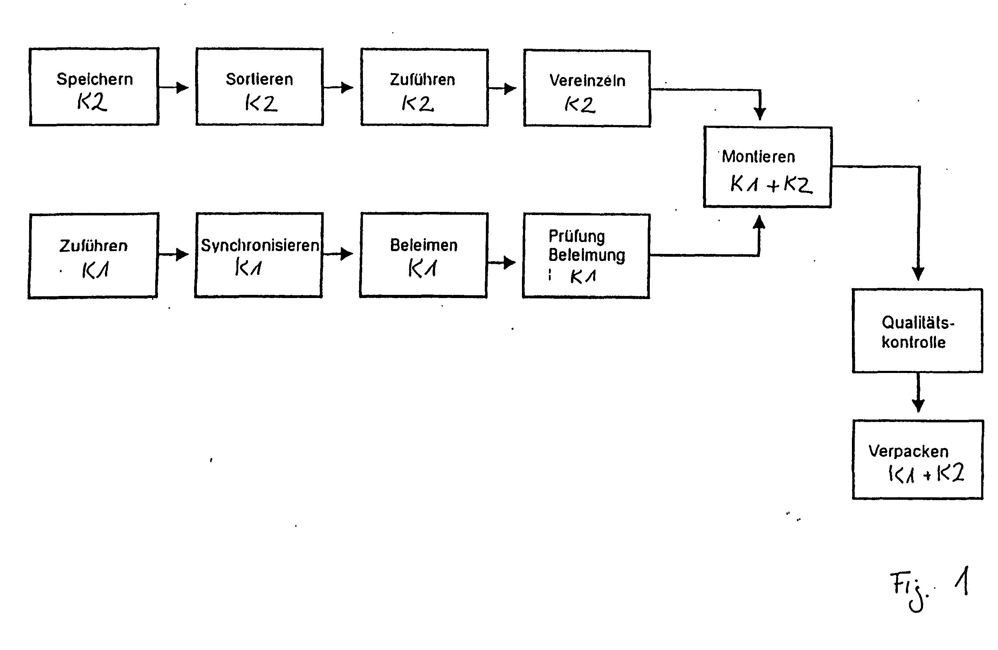

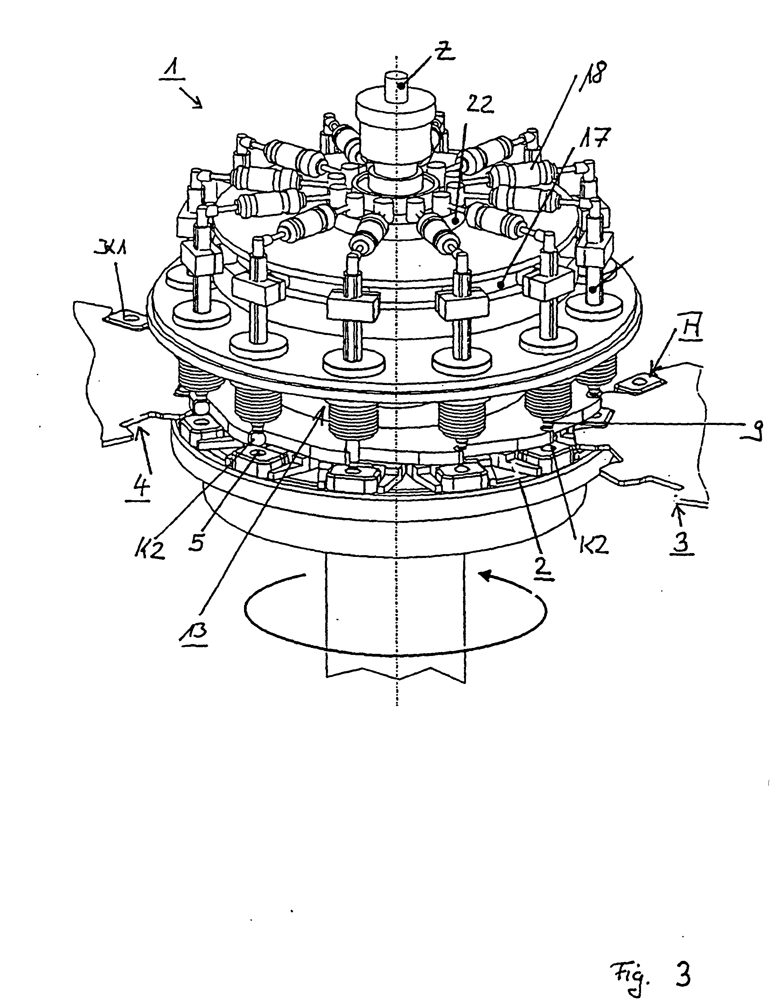

Nachfolgend wird ein Verfahren zur Montage und Verpackung kleinstückiger Artikeln A aus zumindest zwei Komponenten K1,K2 und eine Vorrichtung zur Montage und Verpackung von aus zumindest jeweils zwei Komponenten K1,K2 bestehenden, kleinstückigen Artikeln A nach bevorzugten Ausführungsbeispielen unter Bezugnahme auf die Figuren 1 bis 4 erläutert, wobei die Vorrichtung im vorliegenden Fall zum Montieren und Verpacken eines Geschirrspülmaschinentabs ausgelegt ist, ohne hierauf beschränkt zu sein. Eine Außenkontur der zu einem Artikel A montierten Komponenten K1,K2 ist dementsprechend frei wählbar, ohne daß wesentliche Änderungen des Verfahrens oder der Vorrichtung notwendig sind.

Im vorgenannten bevorzugten Anwendungsbeispiel, einem Geschirrspülmaschinentab, wird ein Artikel A aus einem prismatisch geformten Grundkörper, insbesondere einem Quader mit einer Ausformung zur zumindest teilweisen Aufnahme einer zweiten Komponente K2 gebildet. Die zweite Komponente K2 ist vorzugsweise rotationssymmetrisch ausgebildet.

In Fig. 1 ist schematisch ein Verfahrensablauf zur getrennten Zuführung der ersten und der zweiten Komponente K1,K2, das Montieren des aus erster und zweiter Komponente K1,K2 gebildeten Artikels A, einer Qualitätskontrolle des Artikels A und ein Verpacken der Artikel A in einem Füge- und Verpackungsprozess dargestellt. Eine Verpackung der Artikel erfolgt dabei vorzugsweise in einer Flowpackmaschine.

Gemäß dem in Fig. 1 beschriebenen bevorzugten Verfahren zur Montage und Verpackung von kleinstückigen Artikeln A aus zumindest zwei Komponenten K1,K2 wird die erste Komponente K1 vor der Montage des Artikels A zunächst dem Prozeß zugeführt und synchronisiert, wobei synchronisieren in diesem bevorzugten Ausführungsbeispiel beabstanden auf eine Teilung und anordnen in einer bestimmten, relativen Position, insbesondere zu einer Eingabekette der Vorrichtung zur Montage und Verpackung von aus zumindest jeweils zwei Komponenten K1,K2 bestehenden kleinstückigen Artikeln A, bedeutet.

Die synchronisierten ersten Komponenten K1 werden vorzugsweise im Bereich der Ausformung zur zumindest teilweisen Aufnahme einer zweiten Komponente K2 mit einem Haftmittelauftrag versehen ("beleimt").

Eine derartige Beschichtung mit einem Haftmittel ist vorteilhaft für eine Verbindung zwischen der ersten und der zweiten Komponente K1,K2 jedoch nicht zwingend für das beschriebene Verfahren, und dementsprechend ist das beschriebene Verfahren nicht darauf beschränkt.

Ein gemäß dem beschriebenen bevorzugten Ausführungsbeispiel erfolgter Haftmittelauftrag wird anschließend überprüft. Ein kleinstückiger Artikel A mit ungenügendem Haftmittelauftrag wird gemäß einem weiteren, bevorzugten Ausführungsbeispiel im weiteren Verlauf des Verfahrens aussortiert. Dabei kann eine Aussortierung an verschiedenen Stellen im Ablauf des Verfahrens erfolgen, so kann beispielsweise eine erste Komponente K1 mit ungenügendem Haftmittelauftrag nach einer Montage mit einer zweiten Komponente K2 und damit vor dem Verpackungsschritt aussortiert werden. Somit werden nach dem beschriebenen, bevorzugten Ausführungsbeispiel die ersten Komponenten K1 unabhängig von einer Beurteilung des Haftmittelauftrages dem Montageprozeß zugeführt. Eine Aussortierung von Artikeln mit ungenügendem Haftmittelauftrag erfolgt vor der Verpackung der montierten Artikel.

Die gespeicherte zweite Komponente K2 wird nach dem in Fig. 1 beschriebenen bevorzugten Verfahren zur Montage und Verpackung von kleinstückigen Artikeln A aus zumindest zwei Komponenten K1,K2 nach einem Sortierschritt dem Prozeß zugeführt und vereinzelt.

Die vereinzelte zweite Komponente K2 wird mit der beleimten ersten Komponente K1 zusammengeführt und zu einem Artikel A ("K1+K2") montiert. Nach einer nachgeschalteten Qualitätskontrolle werden die den Anforderungen der Qualitätskontrolle genügenden Artikel A verpackt.

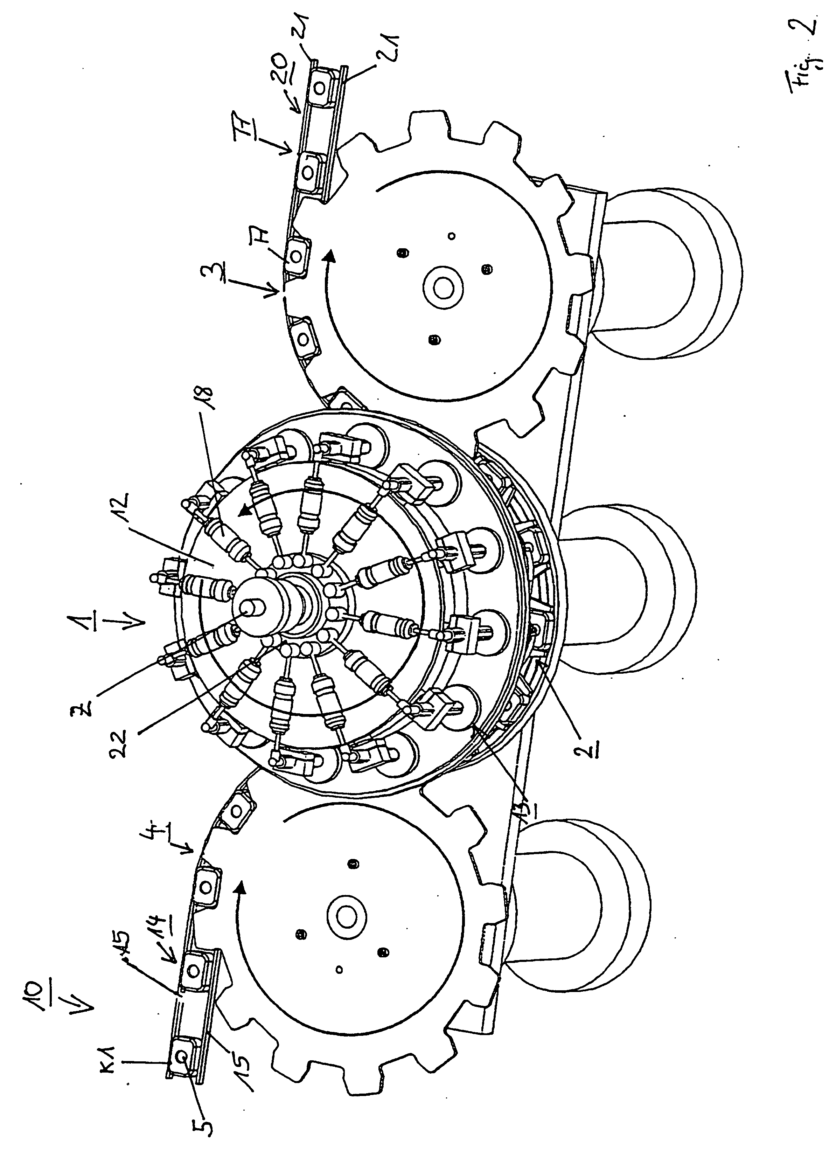

Fig. 2 zeigt eine schematische Darstellung eines Teiles einer Vorrichtung zur Montage und Verpackung von aus zumindest jeweils zwei Komponenten bestehenden kleinstückigen Artikeln A. Die Vorrichtung besteht im wesentlichen aus einer hier nicht näher dargestellten Zuführ- und Synchronisiereinrichtung mit einer Eingabekette 14 mit Seitenführungen 15 für die erste Komponente K1, einer Haftmittelzufuhreinrichtung für die erste Komponente K1 einschließlich einem Prüfsystem für einen genügenden Haftmittelauftrag, einer Speicher- und Zuführeinrichtung für die zweite Komponente K2, einer Handhabungseinrichtung 1 zur Montage der Artikel A, einem Bildverarbeitungssystem zur Qualitätskontrolle der Artikel A, und einer Verpackungsmaschine (nicht gezeigt) zum Verpacken der geprüften Artikel A vorzugsweise in Flowpacks.

Die ersten Komponenten K1 werden der Vorrichtung zur Montage und Verpackung von aus zumindest jeweils zwei Komponenten K1,K2 bestehenden kleinstückigen Artikeln A geordnet auf einem hier nicht gezeigten Transportband liegend in Reihe zugeführt und auf einem Stauband des Zuführ- und Synchronisiersystemes gestaut. Anschießend werden die ersten Komponenten K1 synchronisiert, also auf eine Teilung beabstandet und in einer bestimmten, relativen Position zur Eingabekette 14 der Vorrichtung zur Montage und Verpackung von aus zumindest jeweils zwei Komponenten K1,K2 bestehenden kleinstückigen Artikeln A angeordnet, so daß die ersten Komponenten K1 von Mitnehmern (nicht gezeigt) der Eingabekette 14 übernommen werden können, wobei eine seitliche Führung der ersten Komponenten K1 mittels Seitenführungen 15 erfolgt. Die seitliche Führung der ersten Komponente K1 beginnt dabei erst, nachdem die ersten Komponenten von den Mitnehmern der Eingabekette 14 übernommen wurden.

Wie in Fig. 2 für das bevorzugte Ausführungsbeispiel der Vorrichtung zur Montage und Verpackung von aus zumindest jeweils zwei Komponenten K1,K2 bestehenden kleinstückigen Artikeln A gezeigt, werden die ersten Komponenten K1 von den Mitnehmern der Eingabekette 14 in ein Eingaberad 4 übergeben, wobei die ersten Komponenten K1 insbesondere am Ende der Eingabekette 14 bzw. im Eingaberad 4 eine genau definierbare Position aufweisen.

Aufgrund dieser genauen Positionierung und der auch genau bestimmbaren Position der ersten Komponenten K1 ist ein Haftmittelauftrag und in dem bevorzugten Ausführungsbeispiel auch eine Kontrolle des Haftmittelauftrags vorzugsweise im Bereich der Eingabekette 14 oder im Bereich des Eingaberads 4 durchführbar. Dabei wird aufgrund der besseren Zugänglichkeit im Bereich der Eingabekette 14 der vorzugsweise elektrisch betätigbare Auftragskopf für den Haftmittelauftrag und auch ein Kontrollsensor für den Haftmittelauftrag insbesondere im Bereich der Eingabekette 14 angeordnet. Eine Durchführung des Haftmittelauftrages und/oder die Kontrolle des Haftmittelauftrages sind jedoch auch bei entsprechender baulicher Gestaltung auch ohne Einschränkungen im Bereich des Eingaberades 4 durchführbar.

Durch diesen Haftmittelauftrag, insbesondere in einem Beleimungsvorgang, wird ein stoffschlüssiges Fügen von erster und zweiter Komponente K1,K2 ermöglicht.

In dem bevorzugten Ausführungsbeispiel wird ein zur Steuerung eines Haftmittelauftrages notwendiges Triggersignal von einem optischen Sensor erzeugt, der vorgesehen ist, eine Kante der ersten Komponente K1 zu erkennen. Das Triggersignal des optischen Sensors wird einem Streckensteuergerät zur Verfügung gestellt. Ein vorzugsweise elektrisch betätigter Auftragskopf für den Haftmittelauftrag wird mittels Signalen des Streckensteuergerätes in Verbindung mit einem am Antrieb der Eingabekette 14 bzw. des Eingaberades 4 installierten inkrementalen Schrittgebers betätigt.

Dabei wird in dem bevorzugten Ausführungsbeispiel ausschließlich eine in der ersten Komponente K1 ausgebildete Aussparung 5 zur Aufnahme der zweiten Komponente K2 mit einem Haftmittel beschichtet. Ein Haftmittelauftrag wird anschließend mit einem weiteren Sensor, in dem bevorzugten Ausführungsbeispiel einem Infrarotsensor, kontrolliert.

Ergibt die Kontrolle des Haftmittelauftrages einen ungenügenden oder einen nicht vorhandenen Haftmittelauftrag, wird die entsprechende Komponente K1 aus der Vorrichtung automatisch entfernt. Eine solche Aussortierung erfolgt nach dem beschriebenen, bevorzugten Ausführungsbeispiel erst nach der Montage der kleinstückigen Artikel A, aber vor dem Verpacken im Bereich einer Mitnehmerkette der Verpackungseinrichtung.

Vom Eingaberad 4 werden die ersten Komponenten K1 an kurvengesteuerte Greiferpaare 2 eines Montagekopfes 12 der Handhabungseinrichtung 1 übergeben. Der Montagekopf 12 ist in den Figuren 2,3 und 4 näher gezeigt.

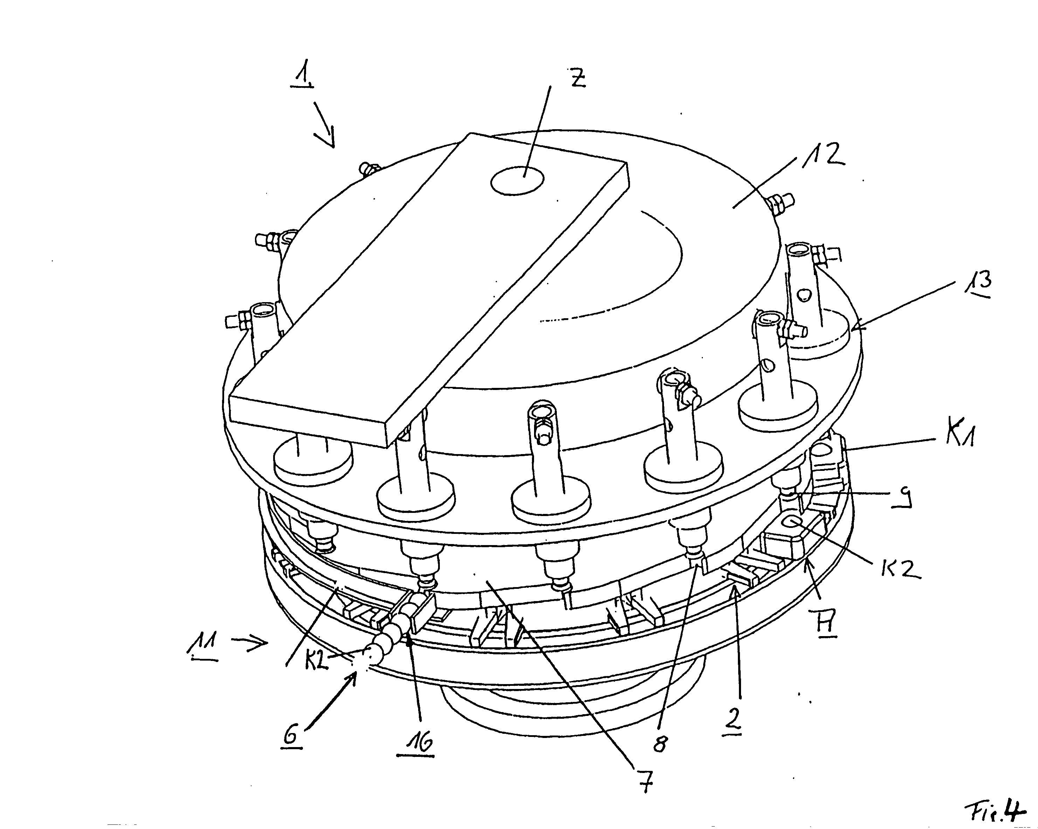

Die zweiten Komponenten K2 werden von einem nicht gezeigten Bandbunker über einen Elevator zu einem Zentrifugalförderer transportiert, wobei der Elevator mittels einer Bestimmung eines Füllstandes des Zentrifugalförderers gesteuert wird. Von diesem Zentrifugalförderer gelangen die zweiten Komponenten K2 mittels einer Zuführeinrichtung 11, in dem in Fig. 4 schematisch gezeigten, bevorzugten Ausführungsbeispiel eine geneigte Zuführschiene 16, zum Montagekopf 12. An der geneigten Zuführschiene 16 sind Sensoren (nicht gezeigt) zur Steuerung des Zentrifugalförderers sowie zur Kontrolle des Materialflusses an zweiten Komponenten K2 bei Betrieb der Vorrichtung angebracht.

Wie insbesondere aus Fig. 2 entnehmbar, weist der Montagekopf 12 einen Vereinzelungsteller 7 mit taschenförmig ausgebildeten Ausnehmungen 8 zur Aufnahme der zweiten Komponente K2 auf, wobei der Vereinzelungsteller 7 in dem bevorzugten Ausführungsbeispiel austauschbar an der Achse angeordnet ist. Der Vereinzelungsteller 7 ist benachbart zur geneigten Führungsschiene 16 angeordnet. Vor diesem Vereinzelungsteller 7 befinden sich die zweiten Komponenten K2 innerhalb der Führungsschiene 16 im Stau. Der mit dem Montagekopf 12 umlaufende Vereinzelungsteller 7 entnimmt jeweils eine zweite Komponente K2 aus diesem Stau. Durch eine spezielle, kurvenförmige geometrische Ausgestaltung einer Seitenfläche des Vereinzelungstellers 7, welche mit den zweiten Komponenten K2 in Kontakt steht, wird eine quasi kontinuierliche Bewegung der zweiten Komponente K2 in der Zuführung der zweiten Komponenten K2 erreicht, wodurch die zweite Komponente K2 insbesondere bei einer hohen Zuführleistung dem Montagekopf 12 schonend zugeführt wird.

Unmittelbar vor dem Vereinzelungsteller 7 des Montagekopfes ist in dem beschriebenen, bevorzugten Ausführungsbeispiel ein pneumatisch betätigter Stopper (nicht gezeigt) vorgesehen, der eine Zuführung der zweiten Komponenten K2 zum Montagekopf 12 beispielsweise abhängig von einem Betriebszustand des Montagekopfes 12 unterbrechen kann. Auf Basis von Signalen der an der geneigten Zuführschiene 16 angebrachten Sensoren kann beispielsweise auch die Anlage stillgesetzt werden, wenn ein Partikelfluss in der Zuführungsschiene 16 unterbrochen ist.

Vom Vereinzelungsteller 7 werden die zweiten Komponenten K2 durch kurvengesteuerte Saugstempeleinrichtungen 13, insbesondere Vertikal-Saugstempeleinrichtungen 13 übernommen. Die Saugstempeleinrichtungen 13 weisen Saugeinrichtungen auf, die zumindest im Bereich der Übernahme der zweiten Komponente K2 aus der Zuführschiene 16 bis zum Einsetzen der zweiten Komponente K2 in die Aussparung 5 zur Aufnahme der zweiten Komponente K2 der ersten Komponente K1 mittels eines zentralen Vakuumverteilers 22 mit Vakuum beaufschlagt sind.

In dem beschriebenen und in den Figuren 2,3 und 4 gezeigten bevorzugten Ausführungsbeispiel weisen die einzelnen Verbindungen zwischen den einzelnen Saugstempeleinrichtungen 13 und dem zentralen Vakuumverteiler 22 jeweils einen Luftfilter 18 auf.

Ein weiteres, nicht gezeigtes Ausführungsbeispiel weist diese Luftfilter 18 nicht auf. Gemäß diesem hier nicht näher dargestellten Ausführungsbeispiel wird eine Luftfilterung im Bereich zwischen dem zentralen Luftverteiler 22 und einer vakuumerzeugenden Einrichtung, insbesondere unmittelbar vor einer Vakuumpumpe, mittels eines zentralen Luftfilters durchgeführt.

In einem weiteren, ebenfalls nicht gezeigten Ausführungsbeispiel sind die einzelnen Saugstempeleinrichtungen 13 zumindest teilweise über einzelne Zuleitungen mit einer Vakuumquelle verbunden. Eine Steuerung einer Beaufschlagung der Saugstempeleinrichtungen 13 mit Vakuum wird über eine Ventilanordnung, bevorzugt Magnetventile, insbesondere in Verbindung mit Drosseleinrichtungen realisiert.

Vom Montagekopf 12 werden die gefügten Artikel A an der Abgabeposition einem Abgaberad 3 und von diesem einer Mitnehmerkette 20 übergeben, welche die Artikel A einer Verpackungsmaschine, insbesondere einer Flowpackmaschine (Schlauchbeutelverpackungsmaschine) zuführt. Vor einem Verpacken der Artikel A erfolgt eine Qualitätskontrolle, vorzugsweise mittels eines Bildverarbeitungssystems (nicht gezeigt), unter Verwendung einer Mehrzahl von Bewertungskriterien, wobei eine Artikelaussortierung erfolgt, wenn zumindest eines der Bewertungskriterien nicht erfüllt wird. Die Bewertungskriterien umfassen dabei zumindest ein Vorhandensein beider Komponenten im Artikel, eine Lage der zweiten Komponente in der Ausnehmung der ersten Komponente, eine Unversehrtheit der ersten Komponente und eine Unversehrtheit der zweiten Komponente. Ist somit zumindest eines der genannten Merkmale nicht erfüllt, so wird der entsprechende Artikel A vor dem Verpacken aus der Anlage entfernt.

Mittels der Mitnehmerkette 20 gelangen die Artikel A lagegerecht in einen in der Flowpackmaschine gebildeten Folienschlauch, der längs- und querversiegelt sowie getrennt wird, wodurch die Artikel A verpackt werden. Die im Zusammenhang mit einem Aussortieren fehlerhafter Artikel A entstehenden Leerpackungen werden abgesaugt.

Aus dem vorstehend beschriebenen, bevorzugten Ausführungsbeispiel geht ein Verfahren zur Montage und Verpackung kleinstückiger Artikel A aus zumindest zwei Komponenten K1 und K2 hervor. Dabei wird eine erste Komponente K1 einer Handhabungseinrichtung 1 zugeführt, der ersten Komponente K1 eine zweite Komponente K2 zugeordnet. Der aus der ersten und der zweiten Komponente K1,K2 montierte Artikel A wird anschließend verpackt. Die erste Komponente K1 wird dabei zwischen einer Eingabe- und einer Abgabeposition durch die Handhabungseinrichtung 1 gehalten durch steuerbare Greiferpaare 2 entlang einer gekrümmten Bahn geführt, wobei die ersten Komponenten K1 an der Eingabeposition aufgenommen, entlang der gekrümmten Bahn geführt und an der Abgabeposition von den Greiferpaaren 2 der Handhabungseinrichtung 1 an eine Weitergabeeinrichtung 3 übergeben werden. Die zweite Komponente K2 wird ebenfalls der Handhabungseinrichtung 1 zugeführt, vereinzelt und mit der ersten Komponente K1 verbunden.

In dem beschriebenen bevorzugten Ausführungsbeispiel des Verfahrens zur Montage und Verpackung kleinstückiger Artikel A werden die ersten Komponenten K1 vorzugsweise lagegeordnet auf einem Transportband in Reihe zugeführt und auf einem Stauband eines Zufuhr- und Synchronisiersystemes gestaut und anschließend mit einer Teilung einer Eingabeeinrichtung 4 synchronisiert und untereinander beabstandet übergeben.

In einem weiteren, bevorzugten Verfahrensschritt werden in den ersten Komponenten K1 eingeformte Ausnehmungen 5 zur Aufnahme der zweiten Komponenten K2 nach der Synchronisierung mit der Eingabeeinrichtung 4 der ersten Komponenten K1 mit einem Haftmittel versehen. Der Haftmittelauftrag erfolgt dabei vorzugsweise in Abhängigkeit von einer Lageerfassung der ersten Komponente K1 mittels eines optischen Sensors, insbesondere eines Kanten-Sensors, für die erste Komponente K1 in Verbindung mit einem nicht gezeigten inkrementalen Geber. Zusätzlich kann eine Kontrolle des Haftmittelauftrages erfolgen, vorzugsweise mittels eines Infrarotsensors, wobei vorzugsweise kleinstückige Artikel mit unzureichendem Haftmittelauftrag der ersten Komponente vor dem Verpacken der kleinstückigen Artikel aussortiert werden.

Die zweite Komponente K2 wird gemäß dem beschriebenen, bevorzugten Ausführungsbeispiel im wesentlichen radial zu der Handhabungseinrichtung 1 vor Verbindung mit der ersten Komponente K1 zugeführt. In einem weiteren, nicht gezeigten Ausführungsbeispiel erfolgt die Zuführung der zweiten Komponente K2 zur Handhabungseinrichtung 1 im wesentlichen tangential.

Die Zuführung der zweiten Komponenten K2 erfolgt vorzugsweise sensorüberwacht, wobei auf Basis von Signalen der an der Zuführschiene 16 angebrachten Sensoren die Anlage stillgesetzt wird, wenn ein Partikelfluss in der Zuführungsschiene 16 unterbrochen ist.

Die zweite Komponente K2 wird gemäß dem beschriebenen Verfahrensschritt aus einem Stau in der Zuführung 6 zu der Handhabungseinrichtung 1 durch einen mit der Handhabungseinrichtung 1 umlaufenden Vereinzelungsteller 7 in taschenförmig ausgeformten Ausnehmungen 8 desselben aufgenommen und somit aus dem Stau vereinzelt. Mit den zweiten Komponenten K2 zumindest zeitweise in Kontakt stehende Seitenfläche des Vereinzelungstellers 7 sind dabei vorzugsweise derart geformt, daß die zweiten Komponenten K2 quasi-kontinuierlich gefördert werden.

Die vereinzelten zweiten Komponenten K2 werden vorzugsweise über einen Sauger 9 angesaugt, in die Ausnehmung 5 der ersten Komponente K1 eingesetzt und mit dieser untrennbar verbunden. Nach dem beschriebenen bevorzugten Ausführungsbeispiel des Verfahrens zur Montage und Verpackung kleinstückiger Artikel A wird jeweils eine zweite Komponente K2 in eine Ausnehmung 5 einer ersten Komponente K1 eingesetzt.

Nach dem Montageschritt erfolgt gemäß diesem bevorzugten Ausführungsbeispiel eine Kontrolle des Artikels A vor der Verpackung unter Anwendung einer Mehrzahl von Bewertungskriterien, wobei eine Artikelaussortierung vorgenommen wird, wenn zumindest eines der Bewertungskriterien nicht erfüllt wird. Die vorzugsweise optische Kontrolle wird bevorzugt mittels einer Bildanalyse durchgeführt. Die Bewertungskriterien umfassen dabei zumindest ein Vorhandensein beider Komponenten K1,K2 im Artikel A, eine Lage der zweiten Komponente K2 in der Ausnehmung 5 der ersten Komponente K1, eine Unversehrtheit der ersten Komponente K1 und eine Unversehrtheit der zweiten Komponente K2.

Nach dem vorstehend beschriebenen bevorzugten Ausführungsbeispiel weist die Vorrichtung zur Montage und Verpackung von aus zumindest jeweils zwei Komponenten K1 und K2 bestehenden, kleinstückigen Artikeln A eine erste Zufuhreinrichtung 10 für die erste Komponente K1, eine zweite Zufuhreinrichtung 11 für die zweite Komponente K2, eine Handhabungseinrichtung 1 zur Verbindung der ersten Komponente K1 mit der zweiten Komponente K2, eine Weitergabeeinrichtung 3 des aus erster und zweiter Komponente K1 und K2 bestehenden Artikels A und eine anschließende Verpackungseinrichtung, insbesondere eine Schlauchbeutelverpackungseinrichtung auf, wobei ein um eine Achse Z drehbarer Montagekopf 12 eine Mehrzahl von in Umfangsrichtung abfolgend angeordneten, kurvengesteuerten Greiferpaaren 2, einen Vereinzelungsteller 7 mit in Umfangsrichtung beabstandeten taschenförmigen Ausnehmungen 8 zur Aufnahme der zweiten Komponente K2 und im Bereich jedes Greiferpaares 2 und zugehöriger taschenförmigen Ausnehmung 8 angeordnete Saugstempeleinrichtungen 13 aufweist. Die Saugstempeleinrichtungen 13 sind dabei mit einem zentralen Vakuumverteiler 22 verbunden.

Nach dem bevorzugten Ausführungsbeispiel weist die Vorrichtung zur Montage und Verpackung von aus zumindest jeweils zwei Komponenten K1 und K2 bestehenden, kleinstückigen Artikeln A ein Eingaberad 4 auf, wobei das Eingaberad 4 stromauf des Montagekopfes 12 angeordnet ist und mit einer, eine Mehrzahl der ersten Komponenten K1 zu dem Eingaberad 4 zuführenden Eingabekette 14 in Wirkverbindung ist. Dabei ist jede erste Komponente K1 bei der Übergabe der ersten Komponenten K1 von Mitnehmern 15 der Eingabekette 14 an das Eingaberad 4 beabstandet, und ist unter präziser Positionierung von den kurvengesteuerten Greiferpaaren 2 des Montagekopfes 12 aufnehmbar.

Eine Haftmittelzufuhreinrichtung zum Einbringen eines Haftmittels in eine Ausnehmung 5 jeder der ersten Komponenten K1 ist nach den beschriebenen Ausführungsbeispielen im Bereich der Eingabekette 14 oder im Bereich des Eingaberades 4 vorgesehen. Zur Betätigung eines elektrisch betätigbaren Auftragskopfes für den Haftmittelauftrag ist vorzugsweise ein im Bereich eines Antriebes (nicht gezeigt) der Eingabekette 14 bzw. des Eingaberades 4 angeordneter Positionssensor, insbesondere ein Kanten-Sensor mit inkrementalem Geber (nicht gezeigt), vorgesehen.

Zu einer Kontrolle des Haftmittelauftrages in jeder Ausnehmung 5 der ersten Komponente K1 ist vorzugsweise ein im Bereich der Eingabekette 14 oder des Eingaberades 4 angeordneter Infrarotsensor (nicht gezeigt) vorgesehen. Eine Ausstoßeinrichtung für erste Komponenten K1 nach Montage mit der zweiten Komponente und vor Verpackung des montierten Artikels A ist in dem beschriebenen bevorzugten Ausführungsbeispiel von einem Ausgangssignal des Infrarotsensors abhängig.

Die zweite Komponente K2 ist einem Zentrifugalförderer nach diesem Ausführungsbeispiel der Vorrichtung zur Montage und Verpackung von aus zumindest jeweils zwei Komponenten K1 und K2 bestehenden, kleinstückigen Artikeln A aus einem Bandbunker über einen Elevator zuführbar, wobei der Elevator in Abhängigkeit von einem Füllstand des Zentrifugalförderers steuerbar ist.

Wie für die genannten Ausführungsbeispiele beschrieben, ist eine vorzugsweise geneigte Zuführungsschiene 16 zur radialen oder tangentialen Zuführung der zweiten Komponente K2 zum Montagekopf 12 im Bereich des Vereinzelungstellers vorgesehen. Dabei sind Sensoren in Verbindung mit der Zuführungsschiene 16 zur Überwachung der Zufuhr von zweiten Komponenten K2, zur Steuerung des Zentrifugalförderers sowie des Montagekopfes 12 vorgesehen. Der Vereinzelungsteller 7 ist austauschbar an der Achse angeordnet. Unmittelbar vor dem Vereinzelungsteller 7 des Montagekopfes 12 ist ein insbesondere pneumatisch betätigten Stopper angeordnet, wobei der Stopper zur Unterbrechung einer Zuführung der zweiten Komponenten K2 zum Montagekopf 12 insbesondere abhängig von einem Betriebszustand des Montagekopfes 12 vorgesehen ist.

Eine im wesentlichen vertikale Bewegung der beschriebenen Saugstempeleinrichtungen 13, insbesondere Vertikal-Saugstempeleinrichtungen 13 ist vorzugsweise mittels einer Kurvenscheibe 17 steuerbar. Die Kurvenscheibe 17 zur Bewegung der Vertikal-Saugstempeleinrichtungen 13 ist bevorzugt austauschbar.

Eine Verbindung der Saugstempeleinrichtungen 13 mit dem zentralen Vakuumverteiler 22 weist gemäß dem bevorzugten Ausführungsbeispiel zumindest einen Luftfilter 18 auf. Eine Baugröße dieser Luftfilter ist an die räumlichen Gegebenheiten des Einbauortes angepaßt.

Gemäß einem weiteren Ausführungsbeispiel ist ein größer dimensionierter, zentraler Luftfilter (nicht gezeigt) zwischen dem Vakuumverteiler 22 und einer vakuumerzeugenden Einrichtung installiert. Dieser zentrale Luftfilter ist von den baulichen Gegebenheiten des Einbauortes deutlich weniger eingeschränkt, wodurch Verschmutzungs- und Verstopfungseffekte des zentralen Luftfilters deutlich reduziert sind. Es sollte dabei angemerkt werden, daß im Bereich der Verpackung von Geschirrspülmaschinentabs eine sehr hohe Staubbelastung auftritt.

Aus dem beschriebenen bevorzugten Ausführungsbeispiel geht hervor, daß ein Abgaberad 3 stromabwärts des Montagekopfes 12 angeordnet ist, wobei das Abgaberad 3 mit einer, eine Mehrzahl der Artikel A vom Abgaberad 3 wegführenden weiteren Mitnehmerkette 20 mit Seitenführungen 21 in Wirkverbindung steht. Das Abgaberad 3 übergibt jeden Artikel A an Mitnehmer (nicht gezeigt) der Mitnehmerkette 20 beabstandet an eine nachgeordnete Verpackungsmaschine, wobei die Mitnehmerkette 20 gleichzeitig die Zuführkette der Verpackungsmaschine darstellt und zur lagegerechten Zuführung der Artikel A an die Verpackungsmaschine vorgesehen ist.

Die erste Komponente K1 ist bevorzugt als prismatischer Körper mit einer sacklochartig ausgeformten Ausnehmung 5 zur Aufnahme der zweiten Komponente K2 ausgebildet. Die zweite Komponente K2 weist in diesem Falle eine im wesentlichen rotationssymmetrisch, insbesondere kugel-, zylinder- oder ellipsoidförmig, geformte Außenfläche auf.

## Patentansprüche

1. Verfahren zur Montage und Verpackung kleinstückiger Artikel (A) aus zumindest zwei Komponenten (K1,K2), wobei eine erste Komponente (K1) einer Handhabungseinrichtung (1) zugeführt, der ersten Komponente (K1) eine zweite Komponente (K2) zugeordnet und der Artikel (A) anschließend verpackt wird, wobei die erste Komponente (K1) zwischen einer Eingabe- und einer Abgabeposition durch die Handhabungseinrichtung (1) entlang einer gekrümmten Bahn geführt, gehalten durch steuerbare Greiferpaare (2), an der Eingabeposition aufgenommen, entlang der gekrümmten Bahn gehalten und an der Abgabeposition von den Greiferpaaren (2) der Handhabungseinrichtung (1) an einen Weitergabeeinrichtung (3) übergeben wird, die zweite Komponente (K2) der Handhabungseinrichtung (1) zugeführt, vereinzelt und mit der ersten Komponente (K1) verbunden wird, **dadurch gekennzeichnet, daß** die zweite Komponente (K2) durch einen mit der Handhabungseinrichtung (1) um eine gemeinsame Achse (Z) umlaufenden Vereinzelungsteller (7) vereinzelt wird.

2. Verfahren nach Anspruch 1, **dadurch gekennzeichnet, daß** eine Mehrzahl erster Komponenten (K1) lagegeordnet auf einem Transportband in Reihe zugeführt und auf einem Stauband eines Zuführ- und Synchronisiersystems gestaut und anschließend die ersten Komponenten (K1) mit einer Teilung einer Eingabeeinrichtung (4) synchronisiert und untereinander beabstandet werden.

3. Verfahren nach Anspruch 1 oder 2, **dadurch gekennzeichnet, daß** Ausnehmungen (5) der ersten Komponenten (K1) nach Synchronisierung derselben mit einem Haftmittel versehen werden.

4. Verfahren nach Anspruch 3, **dadurch gekennzeichnet, daß** ein Haftmittelauftrag in Abhängigkeit von einer Lageerfassung der ersten Komponente (K1) insbesondere mittels eines optischen Sensors, vorzugsweise eines Kanten-Sensors, in Verbindung mit einem inkrementalen Geber für die erste Komponente (K1) erfolgt.

5. Verfahren nach Anspruch 4, **dadurch gekennzeichnet, daß** eine Kontrolle des Haftmittelauftrages, vorzugsweise mittels eines Infrarotsensors, erfolgt.

6. Verfahren nach zumindest einem der vorhergehenden Ansprüche 1 bis 5, **dadurch gekennzeichnet, daß** die zweite Komponente (K2) im wesentlichen radial oder tangential zu der Handhabungseinrichtung (1) vor Verbindung mit der ersten Komponente (K1) zugeführt wird.

7. Verfahren nach Anspruch 6, **dadurch gekennzeichnet, daß** eine Zufuhr der zweiten Komponenten (K2) sensorüberwacht erfolgt, wobei auf Basis von Signalen der an der Zuführschiene (16) angebrachten Sensoren die Anlage stillgesetzt wird, wenn ein Partikelfluss in der Zuführungsschiene (16) unterbrochen ist.

8. Verfahren nach einem der Ansprüche 6 oder 7, **dadurch gekennzeichnet, daß** die zweite Komponente (K2) aus einem Stau in einer Zuführung (6) zu der Handhabungseinrichtung (1) in taschenförmig ausgeformten Ausnehmungen (8) des mit der Handhabungseinrichtung (1) umlaufenden Vereinzelungstellers (7) aufgenommen und aus dem Stau vereinzelt wird.

9. Verfahren nach Anspruch 8, **dadurch gekennzeichnet, daß** eine mit den zweiten Komponenten (K2) zumindest zeitweise in Kontakt stehende Seitenfläche des Vereinzelungstellers (7) derart geformt ist, daß die zweiten Komponenten (K2) quasi-kontinuierlich gefördert werden.

10. Verfahren nach zumindest einem der vorhergehenden Ansprüche 6 bis 9, **dadurch gekennzeichnet, daß** die zweite Komponente (K2) über einen Sauger (9) angesaugt, in die Ausnehmung (5) der ersten Komponente (K1) eingesetzt und mit dieser untrennbar verbunden wird.

11. Verfahren nach zumindest einem der vorhergehenden Ansprüche 7 bis 10, **dadurch gekennzeichnet, daß** jeweils eine zweite Komponente (K2) in eine Ausnehmung (5) einer ersten Komponente (K1) eingesetzt wird.

12. Verfahren nach zumindest einem der vorhergehenden Ansprüche 1 bis 11, **gekennzeichnet durch** eine optische Kontrolle des Artikels (A) vor der Verpackung unter Anwendung einer Mehrzahl von Bewertungskriterien, wobei eine Artikelaussortierung erfolgt, wenn zumindest eines der Bewertungskriterien nicht erfüllt wird.

13. Verfahren nach Anspruch 12, **dadurch gekennzeichnet, daß** die optische Kontrolle mittels einer Bildanalyse durchgeführt wird.

14. Verfahren nach einem der vorhergehenden Ansprüche 12 oder 13, **dadurch gekennzeichnet, daß** die Bewertungskriterien zumindest ein Vorhandensein beider Komponenten (K1,K2) im Artikel (A) und/oder eine Lage der zweiten Komponente (K2) in der Ausnehmung (5) der ersten Komponente (K1) und/oder eine Unversehrtheit der ersten Komponente (K1) und/oder eine Unversehrtheit der zweiten Komponente (K2) umfassen.

15. Vorrichtung zur Montage und Verpackung von aus zumindest jeweils zwei Komponenten (K1,K2) bestehenden, kleinstückigen Artikeln (A), mit einer ersten Zufuhreinrichtung (10) für die erste Komponente (K1), einer zweiten Zufuhreinrichtung (11) für die zweite Komponente (K2), einer Handhabungseinrichtung (1) zur Verbindung der ersten Komponente (K1) mit der zweiten Komponente (K2), einer Weitergabeeinrichtung (3) des aus erster und zweiter Komponente (K1,K2) bestehenden Artikels (A) und einer anschließenden Verpackungseinrichtung, mit einem um eine Achse (Z) drehbaren Montagekopf (12) mit einer Mehrzahl von in Umfangsrichtung abfolgend angeordneten, kurvengesteuerten Greiferpaaren (2), und einem Vereinzelungsteller (7) mit in Umfangsrichtung beabstandeten taschenförmigen Ausnehmungen (8) zur Aufnahme der zweiten Komponente (K2), **dadurch gekennzeichnet, daß** der Vereinzelungsteller (7) mit dem Montagekopf um die gemeinsame Achse (Z) umlaufend angeordnet ist, und daß im Bereich jedes Greiferpaares (2) und zugehöriger taschenförmigen Ausnehmung (8) angeordnete Saugstempeleinrichtungen (13) vorgesehen sind, von denen jede mit einem zentralen Vakuumverteiler (22) verbunden ist.

16. Vorrichtung nach Anspruch 15, **gekennzeichnet durch** ein Eingaberad (4) stromauf des Montagekopfes (12), das mit einer, eine Mehrzahl der ersten Komponenten (K1) zu dem Eingaberad (4) zuführenden Eingabekette (14) in Wirkverbindung ist, wobei jede erste Komponente (K1) von Mitnehmern der Eingabekette (14) an das Eingaberad (4) beabstandet übergeben, und unter präziser Positionierung von den kurvengesteuerten Greiferpaaren (2) des Montagekopfes (12) aufnehmbar sind.

17. Vorrichtung nach einem der Ansprüche 15 oder 16, **dadurch gekennzeichnet, daß** im Bereich der Eingabekette (14) oder des Eingaberades (4) eine Haftmittelzufuhreinrichtung zum Einbringen eines Haftmittels in jeweils eine Ausnehmung (5) der ersten Komponente (K1) vorgesehen ist.

18. Vorrichtung nach Anspruch 17, **dadurch gekennzeichnet, daß** im Bereich eines Antriebes der Eingabekette (14) oder des Eingaberades (4) ein Positionssensor, insbesondere ein Kanten-Sensor, in Verbindung mit einem inkrementalen Geber zur Betätigung eines insbesondere elektrisch betätigbaren Auftragskopfes für den Haftmittelauftrag vorgesehen ist.

19. Vorrichtung nach einem der Ansprüche 17 oder 18, **dadurch gekennzeichnet, daß** ein Infrarotsensor zur Kontrolle des Haftmittelauftrages in der Ausnehmung (5) der ersten Komponente (K1) im Bereich der Eingabekette (14) oder des Eingaberades (4) vorgesehen ist.

20. Vorrichtung nach zumindest einem der vorhergehenden Ansprüche 15 bis 19, **gekennzeichnet durch** eine Ausstoßeinrichtung für erste Komponenten (K1) in Abhängigkeit von einem Ausgangssignal des Infrarotsensors, wobei ein Ausstoß, insbesondere nach dem Montagekopf und vor einer Verpackungseinrichtung vorgesehen ist.

21. Vorrichtung nach zumindest einem der vorhergehenden Ansprüche 15 bis 20, **gekennzeichnet durch** einen Bandbunker für die zweite Komponente (K2), sowie einen Elevator zur Zuführung der zweiten Komponente (K2) zu einem Zentrifugalförderer, wobei der Elevator in Abhängigkeit von einem Füllstand des Zentrifugalförderers steuerbar ist.

22. Vorrichtung nach Anspruch 21, **gekennzeichnet durch** eine geneigte Zuführungsschiene (16) zur Zuführung der zweiten Komponente (K2) radial oder tangential zum Montagekopf (12) im Bereich des Vereinzelungstellers (7).

23. Vorrichtung nach zumindest einem der vorhergehenden Ansprüche 15 bis 22, **dadurch gekennzeichnet, daß** der Vereinzelungsteller (7) austauschbar an der Achse angeordnet ist.

24. Vorrichtung nach zumindest einem der vorhergehenden Ansprüche 15 bis 23, **gekennzeichnet durch** einen unmittelbar vor dem Vereinzelungsteller (7) des Montagekopfes (12) angeordneten insbesondere pneumatisch betätigten Stopper, wobei der Stopper zur Unterbrechung einer Zuführung der zweiten Komponenten (K2) zum Montagekopf (12) insbesondere abhängig von einem Betriebszustand des Montagekopfes (12) vorgesehen ist.

25. Vorrichtung nach zumindest einem der vorhergehenden Ansprüche 22 bis 24, **gekennzeichnet durch** Sensoren in Verbindung mit der geneigten Zuführungsschiene (16) zur Überwachung der Zufuhr von zweiten Komponenten (K2), zur Steuerung des Zentrifugalförderers sowie des Montagekopfes (12).

26. Vorrichtung nach zumindest einem der vorhergehenden Ansprüche 15 bis 25, **dadurch gekennzeichnet, daß** eine Kurvenscheibe (17) zur Steuerung der im wesentlichen vertikalen Bewegungen der Saugstempeleinrichtungen (13), insbesondere Vertikal-Saugstempeleinrichtungen (13) vorgesehen ist.

27. Vorrichtung nach Anspruch 26, **dadurch gekennzeichnet, daß** die Kurvenscheibe (17) zur Bewegung der Vertikal-Saugstempeleinrichtungen (13) austauschbar ist.

28. Vorrichtung nach zumindest einem der vorhergehenden Ansprüche 15 bis 27, **dadurch gekennzeichnet, daß** eine Verbindung der Saugstempeleinrichtungen (13) mit dem zentralen Vakuumverteiler (22) zumindest einen Luftfilter (18) oder eine Verbindung des zentralen Vakuumverteilers (22) mit einer vakuumerzeugenden Vorrichtung einen zentralen Luftfilter aufweist.

29. Vorrichtung nach zumindest einem der vorhergehenden Ansprüche 15 bis 28, **dadurch gekennzeichnet, daß** die erste Komponente (K1) als prismatischer Körper mit einer sacklochartig ausgeformten Ausnehmung (5) zur Aufnahme der zweiten Komponente (K2) ausgebildet ist.

30. Vorrichtung nach zumindest einem der vorhergehenden Ansprüche 15 bis 29, **dadurch gekennzeichnet, daß** die zweite Komponente (K2) eine im wesentlichen rotationssymmetrisch, insbesondere kugel-, zylinder- oder ellipsoidförmig, geformte Außenfläche aufweist.

31. Vorrichtung nach zumindest einem der vorhergehenden Ansprüche 15 bis 30, **dadurch gekennzeichnet, daß** ein Abgaberad (3) stromabwärts des Montagekopfes (12) angeordnet ist, wobei das Abgaberad (3) mit einer, eine Mehrzahl der Artikel (A) vom Abgaberad (3) wegführenden Mitnehmerkette (20) in Wirkverbindung ist, wobei das Abgaberad (3) jeden Artikel (A) an Mitnehmer der Mitnehmerkette (20) beabstandet übergibt.

32. Vorrichtung nach Anspruch 31, **gekennzeichnet durch** eine Verpackungsmaschine, wobei die Mitnehmerkette (20) zur lagegerechten Zuführung der Artikel (A) an die Verpackungsmaschine vorgesehen ist.

## Claims

1. A method for assembling and packing small-sized articles (A) consisting of at least two components (K1, K2), a first component (K1) being supplied to a handling device (1), a second component (K2) being assigned to said first component (K1), and said article (A) being subsequently packed, wherein said first component (K1) is guided between an input position and a discharge position by said handling device (1) along a curved path, held by controllable gripper pairs (2), received in said input position, held along said curved path and transferred in said discharge position by said gripper pairs (2) of said handling device (1) to a transfer means (3), said second component (K2) is supplied to said handling device (1), isolated and connected to said first component (K1), **characterized in that** said second component (K2) is isolated by an isolating disk (7) rotating together with said handling device (1) about a joint axis (Z).

2. A method according to claim 1, **characterized in that** a plurality of first components (K1) are supplied in series in a proper position on a transportation belt and accumulated on an accumulation belt of a feeding and synchronizing system, and said first components (K1) are subsequently synchronized with a graduation of an input means (4) and spaced apart from one another.

3. The method according to claim 1 or 2, **characterized in that** recesses (5) of said first components (K1) are provided with an adhesive after synchronization of said components.

4. The method according to claim 3, **characterized in that** adhesive is applied in response to a positional detection of said first components (K1), in particular by means of an optical sensor, preferably an edge sensor, in combination with an incremental stepping means for said first component (K1).

5. The method according to claim 4, **characterized in that** the application of adhesive is controlled, preferably by means of an infrared sensor.

6. The method according to at least one of the preceding claims 1 to 5, **characterized in that** said second component (K2) is supplied substantially radially or tangentially to said handling device (1) prior to connection to said first component (K1).

7. The method according to claim 6, **characterized in that** a supply of said second components (K2) is sensor-monitored, the system being stopped on the basis of signals from sensors mounted on a supply rail (16) when a component flow in said supply rail (16) is interrupted.

8. The method according to any one of claims 6 or 7, **characterized in that** said second component (K2) is received in pocket-shaped recesses (8) of the isolating disk (7), which is rotating with said handling device (1), from an accumulation in a supply (6) to said handling device (1) and is isolated from said accumulation.

9. The method according to claim 8, **characterized in that** a side surface of said isolating disk (7) which is in contact with said second components (K2) at least temporarily is shaped such that said second components (K2) are conveyed virtually continuously.

10. The method according to at least one of the preceding claims 6 to 9, **characterized in that** said second component (K2) is sucked via a suction means (9), inserted into said recess (5) of said first component (K1) and inseparably connected thereto.

11. The method according to at least one of the preceding claims 7 to 10, **characterized in that** a second component (K2) is inserted into a respective recess (5) of a first component (K1).

12. The method according to at least one of the preceding claims 1 to 11, **characterized by** an optical control of said article (A) prior to packing using a plurality of evaluation criteria, with an article being sorted out if at least one of said evaluation criteria is not satisfied.

13. The method according to claim 12, **characterized in that** said optical control is carried out by means of an image analysis.

14. The method according to any one of the preceding claims 12 or 13, **characterized in that** said evaluation criteria include at least the presence of both components (K1, K2) in said article (A) and/or a position of said second component (K2) in said recess (5) of said first component (K1) and/or intactness of said first component (K1) and/or intactness of said second component (K2).

15. An apparatus for assembling and packing small-sized articles (A) consisting of at least two components (K1, K2) each, comprising a first supply means (10) for said first component (K1), a second supply means (11) for said second component (K2), a handling device (1) for connecting said first component (K1) to said second component (K2), a transfer means (3) of said article (A) consisting of first and second component (K1, K2), and a subsequent packing means, comprising an assembling head (12) which is rotatable about an axis (Z) and includes a plurality of cam-controlled gripper pairs (2) arranged circumferentially in sequential order, and an isolating disk (7) comprising circumferentially spaced-apart pocket-shaped recesses (8) for receiving said second component (K2), **characterized in that** said isolating disk (7) including said assembling head is arranged to rotate about the joint axis (Z), and that suction plunger means (13) are provided in the area of each gripper pair (2) and associated pocket-shaped recess (8), each of said suction plunger means (13) being connected to a central vacuum distributor.

16. The apparatus according to claim 15, **characterized by** an input wheel (4) upstream of said assembling head (12), said wheel being in operative communication with an input chain (14) which supplies a plurality of said first components (K1) to said input wheel (4), each of said first components (K1) being transferred in spaced-apart relationship by carriers of said input chain (14) to said input wheel (4) and being receivable with a precise positioning by the cam-controlled gripper pairs (2) of said assembling head (12).

17. The apparatus according to any one of claims 15 or 16, **characterized in that** an adhesive supplying means is provided in the area of said input chain (14) or said input wheel (4) for introducing an adhesive into a respective recess (5) of said first component (K1).

18. The apparatus according to claim 17, **characterized in that** a position sensor, in particular an edge sensor, is provided in the area of a drive of said input chain (14) or said input wheel (4) in combination with an incremental stepping means for actuating a particularly electrically operable application head for the application of adhesive.

19. The apparatus according to any one of claims 17 or 18, **characterized in that** an infrared sensor is provided for controlling the application of adhesive in said recess (5) of said first component (K1) in the area of said input chain (14) or said input wheel (4).

20. The apparatus according to at least one of the preceding claims 15 to 19, **characterized by** an ejection means for first components (K1) in response to an output signal of said infrared sensor, an ejecting operation being carried out in particular downstream of said assembling head and upstream of a packing means.

21. The apparatus according to at least one of the preceding claims 15 to 20, **characterized by** a belt bunker for said second component (K2) and by an elevator for supplying said second component (K2) to a centrifugal conveyor, said elevator being controllable in response to a filling level of said centrifugal conveyor.

22. The apparatus according to claim 21, **characterized by** an inclined supply rail (16) for supplying said second component (K2) radially or tangentially to said assembling head (12) in the area of said isolating disk (7).

23. The apparatus according to at least one of the preceding claims 15 to 21, **characterized in that** said isolating disk (7) is exchangeably arranged on a shaft.

24. The apparatus according to at least one of the preceding claims 15 to 23, **characterized by** a stopper which is arranged directly in front of said isolating disk (7) of said assembling head (12) and is operated in particular pneumatically, said stopper being provided for interrupting a supply of said second components (K2) to said assembling head (12), in particular in response to an operative state of said assembling head (12).

25. The apparatus according to at least one of the preceding claims 22 to 24, **characterized by** sensors in combination with the inclined supply rail (16) for monitoring the supply of second components (K2), for controlling said centrifugal conveyor and said assembling head (12).

26. The apparatus according to at least one of the preceding claims 15 to 25, **characterized in that** a cam (17) is provided for controlling the substantially vertical movements of said suction plunger means (13), in particular vertical suction plunger means (13).

27. The apparatus according to claim 26, **characterized in that** said cam (17) for moving said vertical suction plunger means (13) is exchangeable.

28. The apparatus according to at least one of the preceding claims 15 to 27, **characterized in that** a connection of said suction plunger means (13) to said central vacuum distributor (223) comprises at least one air filter (18), or a connection of said central vacuum distributor (22) to a vacuum-generating device comprises a central air filter.

29. The apparatus according to at least one of the preceding claims 15 to 28, **characterized in that** said first component (K1) is designed as a prismatic body with a recess (5) shaped in the form of a blind hole for receiving said second component (K2).

30. The apparatus according to at least one of the preceding claims 15 to 29, **characterized in that** said second component (K2) has an outer surface substantially shaped in rotational symmetry, in particular as a ball, cylinder or ellipsoid.

31. The apparatus according to at least one of the preceding claims 15 to 30, **characterized in that** a discharge wheel (3) is arranged downstream of said assembling head (12), said discharge wheel (3) being in operative communication with a carrier chain (20) carrying away a plurality of said articles (A) from said discharge wheel (3), said discharge wheel (3) transferring each article (A) to carriers of said carrier chain (20) in spaced-apart relationship.

32. The apparatus according to claim 31, **characterized by** a packing machine, said carrier chain (20) being provided for supplying said articles (A) in a correct position to said packing machine.

## Revendications

1. Procédé pour assembler et emballer des articles de petite taille (A) d'au moins deux composants (K1, K2), dans lequel un premier composant (K1) est amené à un dispositif de manutention (1), un second composant (K2) est associé au premier composant (K1) et l'article (A) est alors emballé, le premier composant (K1) étant guidé entre une position d'entrée et de sortie par le dispositif de manutention (1) le long d'un trajet courbé, maintenu par une paire de pinces (2) commandables, accueilli dans la position d'entrée, maintenu le long du trajet courbé et transmis en position de sortie par la paire de pinces (2) du dispositif de manutention (1) à un dispositif de transmission (3), le second composant (K2) étant amené au dispositif de manutention (1), séparé et relié au premier composant (K1), **caractérisé en ce que** le second composant (K2) est séparé par un plateau de séparation (7) tournant autour d'un axe commun (Z) avec le dispositif de manutention (1).

2. Procédé selon la revendication 1, **caractérisé en ce qu'**une pluralité de premiers composants (K1) bien disposés sur un tapis de transport sont amenés successivement et retenus sur un tapis de retenue d'un système d'alimentation et de synchronisation et **en ce que** les premiers composants (K1) sont alors synchronisés par une division d'un dispositif d'entrée (4) et espacés les uns des autres.

3. Procédé selon la revendication 1 ou 2, **caractérisé en ce que** des évidements (5) des premiers composants (K1) sont remplis après synchronisation de ces derniers par un agent adhésif.

4. Procédé selon la revendication 3, **caractérisé en ce qu'**une application d'agent adhésif s'effectue en fonction d'un enregistrement de position des premiers composants (K1) en particulier au moyen d'un capteur optique, de préférence un détecteur de bordures, relié à un transmetteur incrémental pour les premiers composants (K1).

5. Procédé selon la revendication 4, **caractérisé en ce qu'**un contrôle de l'application de l'agent adhésif s'effectue de préférence à l'aide d'un capteur infrarouge.

6. Procédé selon au moins une quelconque des revendications 1 à 5 précédentes, **caractérisé en ce que** le second composant (K2) est amené sensiblement radialement ou tangentiellement au dispositif de manutention (1) avant liaison au premier composant (K1).

7. Procédé selon la revendication 6, **caractérisé en ce que** l'alimentation en seconds composants (K2) s'effectue sous surveillance par capteurs, l'installation étant arrêtée en fonction de signaux provenant des capteurs disposés sur les rails d'alimentation (16) lorsque le flux de particules est interrompu dans les rails d'alimentation (16).

8. Procédé selon l'une quelconque des revendications 6 ou 7, **caractérisé en ce que** le second composant (K2) provenant d'une retenue est accueilli dans un dispositif d'alimentation (6) vers le dispositif de manutention (1) dans des évidements formés en sac (8) du plateau de séparation (7) tournant avec le dispositif de manutention (1) et séparé de l'encombrement.

9. Procédé selon la revendication 8, **caractérisé en ce qu'**une surface latérale du plateau de séparation (7) étant au moins partiellement en contact avec les seconds composants (K2) est formée de manière que les seconds composants (K2) puissent être amenés de manière quasi continue.

10. Procédé selon au moins une quelconque des revendications 6 à 9 précédentes, **caractérisé en ce que** les seconds composants (K2) sont aspirés par une ventouse (9), introduits dans l'évidement (5) des premiers composants (K1) et reliés de manière inamovible à ces derniers.

11. Procédé selon au moins une quelconque des revendications 7 à 10 précédentes, **caractérisé en ce qu'**un second composant (K2) est respectivement introduit dans un évidement (5) d'un premier composant (K1).

12. Procédé selon au moins une quelconque des revendications 1 à 11 précédentes, **caractérisé par** un contrôle optique de l'article (A) avant l'emballage en utilisant une pluralité de critères d'évaluation, un tri des articles ayant lieu lorsqu'au moins un des critères d'évaluation n'est pas rempli.

13. Procédé selon la revendication 12, **caractérisé en ce que** le contrôle optique est effectué au moyen d'une analyse d'image.

14. Procédé selon l'une quelconque des revendications 12 ou 13 précédentes, **caractérisé en ce que** les critères d'évaluation comprennent au moins la présence des deux composants (K1, K2) dans l'article (A) et/ou le positionnement du second composant (K2) dans l'évidement (5) du premier composant (K1) et/ou l'intégrité du premier composant (K1) et/ou l'intégrité du second composant (K2).

15. Dispositif pour monter et emballer des articles (A) de petite taille composés d'au moins deux composants (K1, K2) comportant un premier dispositif d'alimentation (10) pour les premiers composants (K1), un second dispositif d'alimentation (11) pour les seconds composants (K2), un dispositif de manutention (1) pour relier les premiers composants (K1) aux seconds composants (K2), un dispositif de transmission (3) de l'article (A) composé des premiers et seconds composants (K1, K2) et un dispositif d'emballage final pourvu d'une tête de montage (12) rotative autour d'un axe (Z) pourvue d'une pluralité de paires de pinces (2) commandées par came, disposées successivement dans le sens périphérique et d'un plateau de séparation (7) pourvu d'évidements (8) en forme de sac espacés sur la périphérie pour accueillir les seconds composants (K2), **caractérisé en ce que** le plateau de séparation (7) est disposé de manière tournante avec la tête de montage autour de l'axe commun (Z) et **en ce que** des dispositifs de mandrin d'aspiration (13) disposés dans la zone de chaque paire de pinces (2) et de l'évidement (8) en forme de sac correspondant, lesquels étant tous reliés à un répartiteur de vide central (22), sont prévus.

16. Dispositif selon la revendication 15, **caractérisé par** une roue d'entrée (4) en amont de la tête de montage (12), étant en liaison active avec une chaîne d'entrée (14) amenant une pluralité de premiers composants (K1) dans la roue d'entrée (4), chaque premier composant (K1) étant transmis de manière espacée par des entraîneurs de la chaîne d'entrée (14) à la roue d'entrée (4) et pouvant être accueilli par un positionnement précis des paires de pinces (2) commandées par came de la tête de montage (12).

17. Dispositif selon une quelconque des revendications 15 ou 16 précédentes, **caractérisé en ce qu'**un dispositif d'alimentation en agent adhésif destiné à l'alimentation en agent adhésif dans chaque évidement (5) des premiers composants (K1) est prévu dans la zone de la chaîne d'entrée (14) ou de la roue d'entrée (4).

18. Dispositif selon la revendication 17, **caractérisé en ce qu'**un capteur de position, en particulier un détecteur de bordures, relié à un transmetteur incrémental pour l'actionnement d'une tête d'application actionnable surtout électriquement pour l'application de l'agent adhésif est prévu dans la zone d'entraînement de la chaîne d'entrée (14) ou de la roue d'entrée (4).

19. Dispositif selon l'une quelconque des revendications 17 ou 18, **caractérisé en ce qu'**un capteur infrarouge destiné au contrôle de l'application de l'agent adhésif est prévu dans l'évidement (5) des premiers composants (K1) dans la zone de la chaîne d'entrée (14) ou de la roue d'entrée (4).

20. Dispositif selon au moins une quelconque des revendications 15 à 19 précédentes, **caractérisé par** un dispositif d'éjection pour les premiers composants (K1) dépendant d'un signal de sortie du capteur infrarouge, une éjection étant prévue en particulier après la tête de montage ou avant d'un dispositif d'emballage.

21. dispositif selon au moins une quelconque des revendications 15 à 20 précédentes, **caractérisé par** un abri de tapis pour les seconds composants (K2), ainsi qu'un élévateur pour amener les seconds composants (K2) vers un convoyeur centrifuge, l'élévateur pouvant être commandé en fonction d'un état de remplissage du convoyeur centrifuge.

22. Dispositif selon la revendication 21, **caractérisé par** des rails d'alimentation (16) inclinés pour amener les seconds composants (K2) radialement ou tangentiellement par rapport à la tête de montage (12) dans la zone du plateau de séparation (7).

23. Dispositif selon au moins l'une quelconque des revendications 15 à 22 précédentes, **caractérisé en ce que** le plateau de séparation (7) est disposé de manière à pouvoir être échangé sur l'axe.

24. Dispositif selon au moins une quelconque des revendications 15 à 23 précédentes, **caractérisé par** un stoppeur actionné en particulier pneumatiquement disposé immédiatement avant le plateau de séparation (7) de la tête de montage (12), le stoppeur étant prévu pour interrompre l'alimentation en seconds composants (K2) vers la tête de montage (12) en particulier en fonction de l'état de fonctionnement de la tête de montage (12).

25. Dispositif selon au moins une quelconque des revendications 22 à 24 précédentes, **caractérisé par** des capteurs reliés aux rails d'alimentation (16) inclinés afin de surveiller l'alimentation en seconds composants (K2) et de commander le convoyeur centrifuge ainsi que la tête de montage (12).

26. Dispositif selon au moins une quelconque des revendications 15 à 25 précédentes, **caractérisé en ce qu'**un disque-came (17) est prévu afin de commander les mouvements sensiblement verticaux des dispositifs de mandrin d'aspiration (13), en particulier les dispositifs de mandrin d'aspiration verticaux.

27. Dispositif selon la revendication 26, **caractérisé en ce que** le disque-came (17) peut être échangé pour déplacer les dispositifs de mandrin d'aspiration verticaux (13).

28. Dispositif selon au moins une quelconque des revendications 15 à 27, **caractérisé en ce qu'**un raccordement des dispositifs de mandrin d'aspiration (13) au répartiteur de vide central (22) comporte au moins un filtre à air (18) ou un raccordement du répartiteur de vide central (22) à un dispositif générant du vide comporte au moins un filtre à air central.

29. Dispositif selon au moins une quelconque des revendications 15 à 28 précédentes, **caractérisé en ce que** le premier composant (K1) est conçu comme un corps prismatique pourvu d'un évidement (5) formé en sac pour accueillir le second composant (K2).

30. Dispositif selon au moins une des revendications 15 à 29 précédentes, **caractérisé en ce que** le second composant (K2) comporte une surface externe sensiblement ronde symétriquement, en particulier sphérique, cylindrique ou en ellipse.

31. Dispositif selon au moins une quelconque des revendications 15 à 30 précédentes, **caractérisé en ce qu'**une roue de sortie (3) est installée en aval de la tête de montage (12), la roue de sortie (3) étant en liaison active avec une chaîne de reprise (20) comportant une pluralité d'articles (A) de la roue de sortie (3), la roue de sortie (3) transmettant chaque article (A) à un poste de la chaîne de reprise (20) de manière espacée.

32. Dispositif selon la revendication 31, **caractérisé par** une machine d'emballage, la chaîne de reprise (20) étant prévue pour amener les articles (A) bien placés à la machine d'emballage.
